# EUROPEAN PATENT SPECIFICATION

(11) **EP 4 615 721 B1**
(45) Date of publication and mention of the grant of the patent: **08.04.2026**
(21) Application number: 24791113.4
(22) Date of filing: 26.09.2024
(51) Int. Cl.: B60N 2/01, B60N 2/08, B60N 2/26, B60N 2/28

(54) **A MODULAR INTEGRATED CAR SAFETY SEAT**
MODULARER INTEGRIERTER AUTOSICHERHEITSSITZ
SIÈGE DE SÉCURITÉ DE VOITURE INTÉGRÉ MODULAIRE

(30) Priority: 27.09.2023 IL 30731123
(43) Date of publication of application: 17.09.2025
(73) Proprietor: M.I.C.S.S 11 Ltd, 6937912 Tel Aviv (IL)
(72) Inventor: HADAD, Itay, Moshav Olesh (IL)
(74) Representative: Schlich
(86) International application number: PCT/IL2024/050957
(87) International publication number: WO 2025/069027

(56) References cited:
- WO-A1-2017/148309
- CN-A- 110 962 712
- DE-U1- 8 603 604

## Description

### FIELD OF THE INVENTION

The present invention relates in general to the field of vehicular safety seats. More specifically, to a Modular Integrated Car Safety Seat (MICSS).

### BACKGROUND OF THE INVENTION

Car safety seats have been in common use for many decades, protecting children during their travel in a vehicle and, particularly, in the event of a collision or a sudden deceleration. The car safety seats have made significant progress over the years in both safety and comfort aspects, during which, the car safety seats have been upgraded with reinforcements, lateral protection elements, cushioning, auxiliary comfort accessories, etc. For example, DE 8603604 describes a safety seat for children in motor vehicles, comprising a seat element with two armrests arranged on the sides and a backrest which can be pivoted relative to the seat element and has two headrests arranged on the top sides, wherein the seat element and the backrest are essentially designed as shells made of plastic.

However, regardless of their overall improvements, the use of car safety seats still holds a challenge as to their proper in-car installation and use, resulting in many cases of improper restraint of a child to a safety seat and/or improper restraint of the safety seat to the front passenger, and/or rear seats of the car, both of which compromise the child's safety. Furthermore, with the added improvements, modern car safety seats are heavier and larger, and therefore significantly reduce the back seat capacity in a standard family car, thus challenging mutual family travels, where three or more differently aged family members should occupy the back seat.

For example, whereas two safety seats are installed at the back seat of a standard family car, it may be impossible to seat another child therebetween. Therefore, in many cases, families that routinely use two or more safety seats are compelled to repeatedly remove and reinstall at least one of the safety seats, where further to the cumbersome handling of the heavy seat(s), the recurring uninstall/reinstall operations of the safety seats increase the risk of its improper restraint to the car.

### SUMMARY OF THE INVENTION

The present invention provides a Modular Integrated Car safety Seat as defined in the claims.

In one aspect, the present invention related to a Modular Integrated Car Safety Seat (MICSS 100), comprising: a) a base assembly (110) which is rigidly attached to a vehicle's chassis, wherein said base assembly comprises an adjustable seat (111), and a seat height adjustment mechanism thereof, b) a backrest assembly (120) and an inclination adjustment mechanism thereof, said backrest assembly comprises an adjustable headrest (124), and an adjustment mechanism thereof, wherein said backrest assembly is rotatably connected to said base assembly (110), and c) adjustment actuators (111a,120a,124a) for actuating the adjustment mechanisms of the adjustable seat height, the headrest height, and the backrest inclination, wherein said backrest assembly (120) is rotatably connected to said base assembly (110) at two or more detachable locked positions, where at least one of said two or more detachable locked positions is an upright position, in which said MICSS (100) is configured for use as a car safety seat, and another one of said two or more detachable locked positions, is a stored position, in which said MICSS (100) is configured for use as a regular vehicle seat cushion.

According to an embodiment of the present invention, the backrest assembly (120) is rotatably connected to the base assembly (110) by one or more backrest inclination locks (409) that selectively lock or enable the respective rotation of backrest assembly (120) and base assembly (110), wherein, optionally, each of the one or more inclination locks (409) comprises a wheel (409a), and a corresponding socket (409b), one of which is firmly attached to the base assembly (110), while the second of which is firmly attached to the backrest assembly (120), thus the engagement of said wheel (409a) and socket (409b) forms a rigid connection between backrest assembly (120) and base assembly (110), whereas the inclination adjustment actuator (120a) is actuated, it exerts the disengagement of said wheel (409a) and socket (409b), thereby enabling the respective rotation of backrest assembly (120) and base assembly (110). The wheel (409a) and the socket (409b) are correspondingly cogged or provided with a locking-pin-and-sockets arrangement.

The adjustment mechanisms may be powered by driving means such as electric driving means, pneumatic driving means, hydraulic driving means, and any combination thereof. Furthermore, one or more of the adjustment mechanisms may be electronically controlled by integrated control means such as a control panel installed at an accessible portion of said MICSS (100), or by remote control means selected from the group consisting of: designated control buttons in the vehicle dashboard, a vehicular multimedia device, a keychain remote control, a remote computing device, a user's mobile device, and any combination thereof, wherein the MICSS (100) further comprises a communication module. The control means may comprise voice activation module for operating said MICSS (100) by predetermined voice commands.

The adjustment mechanisms of the adjustable seat and/or headrest may comprise locking arrangement for enabling multiple lockable height positions thereof.

According to certain embodiments of the present invention, the adjustment mechanism of the adjustable seat (111) is configured to enable simultaneous lifting and advancing thereof with respect to base assembly (110) and backrest assembly (120).

### BRIEF DESCRIPTION OF DRAWINGS

For a better understanding of various embodiments of the present invention and to show how the same may be carried into effect, reference is made, by way of example, to the accompanying drawings, in which:
**Figs. 1A-1B** illustrate an isometric view of a Modular Integrated Car Safety Seat also referred to herein as MICSS, according to an embodiment of the present invention;
**Figs. 2A-2D** illustrate various configurations of integrated use of a MICSS in a vehicle's rear seat, according to an embodiment of the present invention;
**Figs. 3A-3B** illustrate an optional adjustment mechanism of the headrest of a MICSS, according to an embodiment of the present invention;
**Fig. 3C** illustrates an exemplary configuration of the MICSS (100) which may be suitable for infants/toddlers, according to an embodiment of the present invention;
**Figs. 4A-4B** illustrate an internal view of the base assembly showing an exemplary configuration of the seat height and inclination adjustment mechanisms of a MICSS, according to an embodiment of the present invention;
**Fig. 4C** illustrates an optional backrest inclination lock, according to an embodiment of the present invention;
**Fig. 5** illustrates rigid components of MICSS and the rotation of the backrest assembly with respect to base assembly, according to an embodiment of the present invention;
**Figs. 6A-6B** illustrate rotations of backrest assembly between stored and upright positions;
**Fig. 7** illustrates an additional padding layer provided for supporting smaller infants that accommodate the MICSS; and
**Fig. 8** illustrates an isometric bottom view of base assembly (110) of MICSS (100), according to certain embodiments of the present invention.

### DETAILED DESCRIPTION OF EMBODIMENTS OF THE INVENTION

The present invention relates to a Modular Integrated Car Safety Seat (MICSS), which replaces a vehicle seat cushion or a portion thereof, and selectively functions either as a regular vehicle's seat cushion or as a child safety seat. The selective use of the proposed MICSS is obtained by an effortless shifting thereof between an upright position for use as a car safety seat and a stored position in which the MICSS's boundaries correspond to the boundaries of the original vehicle seat cushion and, hence, the MICSS seamlessly functions as a regular vehicle seat cushion.

The proposed MICSS may be installed during the manufacturing process of a vehicle or be provided as a simple-to-install retrofit for an existing vehicle, where one or more units of the proposed MICSS are installed interchangeably with a portion of a vehicle seat cushion (i.e., the seating part thereof) or its entirety (e.g., where two or three units of MICSS (100) may replace the entire rear seat cushion or a single unit of MICSS (100) replaces the cushion of the front passenger seat). Therefore, the external dimensions of a single unit of the proposed MICSS may correspond to the dimensions of a vehicle seat portion occupied by an average passenger, for instance, a third of the width of a vehicle back seat intended for three passengers. Thereby the MICSS enables highly flexible use of the back seat by up to three safety seat occupants, as well as any combination of safety seat and regular seat occupants of any age.

Furthermore, for its use as a safety seat (i.e., in its upright position), the MICSS comprises adjustable features such as its headrest, seat height, and backrest inclination, thereby facilitating its adaptation to children of various ages and heights and an extended use thereof.

In the detailed description, embodiments of the present invention are discussed and illustrated, and references are made to accompanying drawings. These embodiments and accompanying drawings should be understood as non-limiting examples of implementing the present invention. Furthermore, terms such as "optionally", "for instance", "for example", "exemplary", "e.g.,", "may", etc., refer to optional elements or steps being selected in certain embodiments of the invention for the sake of simplicity and clarity of illustration. It should be understood, however, that optional elements or steps mentioned in different embodiments may be used to implement further embodiments of the present invention.

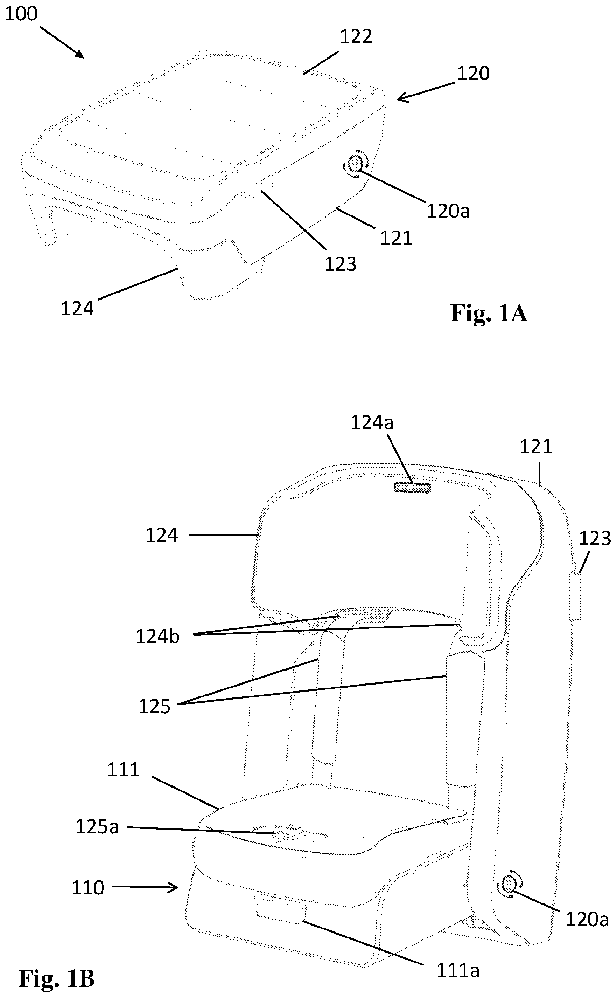

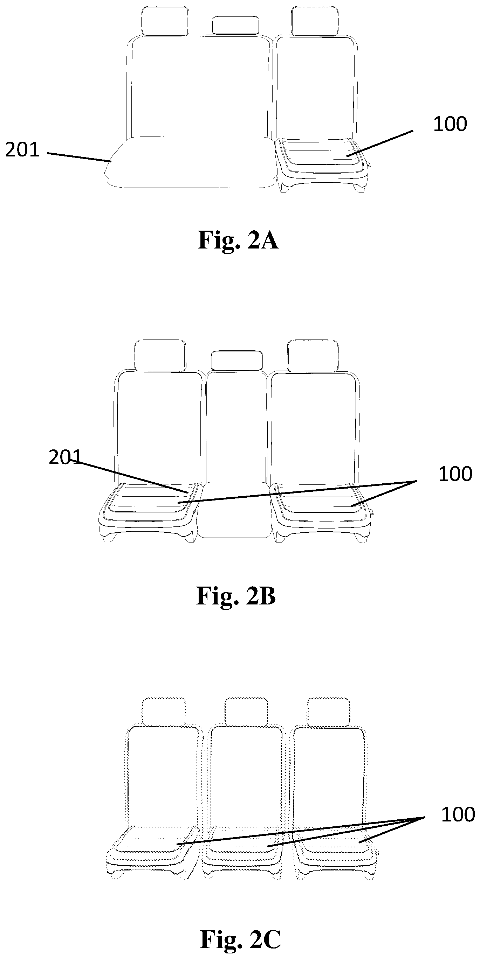

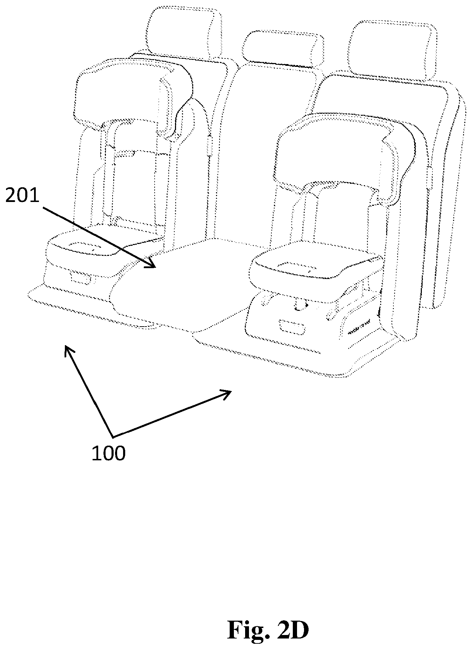

**Figs. 1A-1B** illustrate an isometric view of a Modular Integrated Car Safety Seat, also referred to herein as MICSS (100), according to an embodiment of the present invention. In **Fig. 1A** the MICSS (100) is shown folded at a stored position, where it functions as a common seat cushion, for instance, of a vehicle rear seat (further shown in **Fig. 2****),** whereas in **Fig. 1B** the MICSS (100) is shown deployed at an upright position, in which the MICSS (100) functions as an adjustable car safety seat, enabling the seating and securement of a child.

The MICSS (100) comprises (i) a base assembly (110) with an adjustable seat (111) and a seat height adjustment actuator such as a knob (111a); and (ii) a backrest assembly (120) which comprises an inclination adjustment actuator such as a button (120a), a backrest frame (121) and padded seat cushion (122) providing a comfort use of the MICSS (100) as a regular car seat cushion; a deployment strap (123); an adjustable headrest (124) with a headrest adjustment actuator such as a button (124a); and safety belts (125) which are threaded through safety belts threading sockets (124b) within adjustable headrest (124).

Each of the safety belts (125) may be anchored either to the base assembly (110) or to the backrest assembly (120) with its lower end, and to the safety belts threading sockets (124b) at its top end. Optionally, spring loaded belt collector drums are provided at either of the belts' ends (i.e., within base assembly (110) or behind adjustable headrest (124)), to store unused portions of the safety belts (125). Furthermore, safety belts (125) comprise standard latch plates (not shown) for being latched into a buckle (125a), thus providing a five-point safety harness for securing an infant/toddler to the MICSS (100).

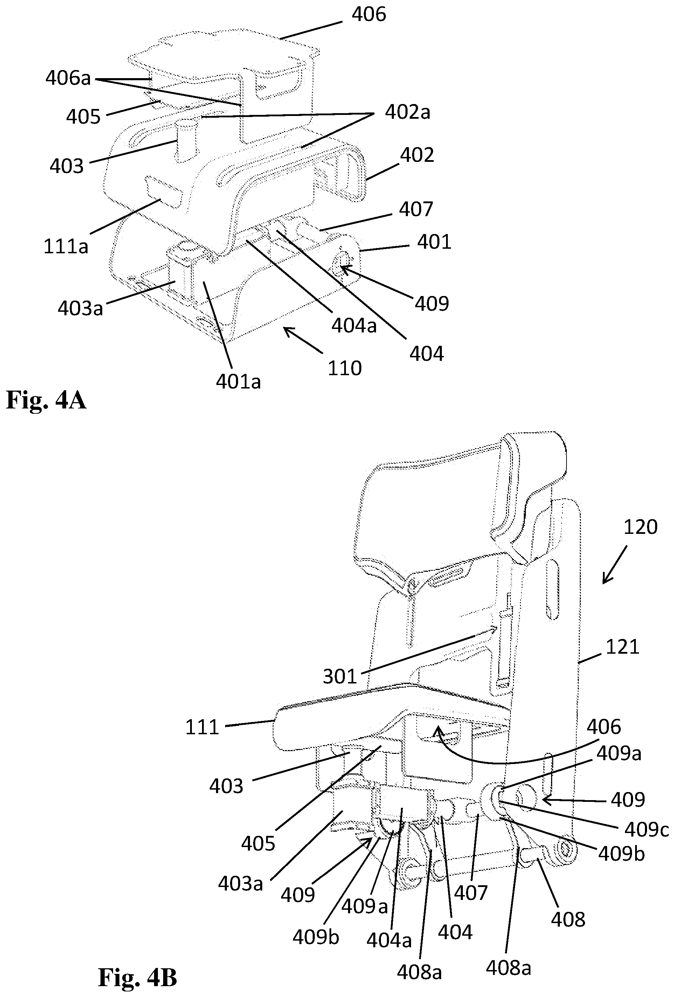

The MICSS (100) can be converted from a regular back seat cushion (i.e., stored position) to a child safety seat (i.e., upright position) by actuating (e.g., pressing, turning, or both) the inclination adjustment button (120a), which unlocks an inclination lock (409) (further discussed in **Figs. 4A-4B****),** and upward rotation of the backrest assembly (120) to a desired inclination angle, releasing the inclination adjustment button (120a) and slightly rotating the backrest assembly (120) back and forth to re-engage the backrest inclination lock (409). The abovementioned inclination adjustment mechanism enables a simple and prompt conversion of the MICSS (100) between a stored state and a deployed state, thus facilitating a flexible use exempted from the cumbersome routine of recurring installing/uninstalling of safety seats for various use scenarios.

Subsequently, the MICSS (100) is adapted to a specific child age/height by performing two further simple operations, beginning with adjusting the height of adjustable seat (111) by actuating (e.g., pulling) the seat height adjustment knob (111a) which operates a seat adjustment mechanism (further discussed in **Figs. 4A-4B****),** while grasping and lifting the adjustable seat (111) to a desirable extent, and then releasing the knob (111a) to re-engage the position lock. Finally, the adjustable headrest (124) is adjusted by actuating (e.g., pressing) the headrest adjustment button (124a), then lifting or lowering headrest (124) to a desirable extent and releasing the headrest adjustment button (124a) to re-engage its position lock.

The MICSS (100) may be folded back into its stored position by performing the above operations in an opposite order, namely, returning the adjustable seat (111) and the headrest (124) to their initial height, and rotating the backrest assembly (120) back to a stored position.

In the is manner, the MICSS (100) may be repeatedly converted between a deployed (i.e., upright) position, being adapted to a specific child, and a stored position, without carrying any weight nor being required to the challenging harnessing of a safety seat to anchoring means of the vehicle. Moreover, the abovementioned conversion of MICSS (100), between stored and upright positions and any inclination therebetween, is obtained by a simple and prompt action of operating an actuator while moving the backrest assembly (120) to a desired lockable position.

It can be readily noted in **Fig. 1A****,** that at the stored position of the MICSS (100), the base (110) is entirely concealed within the backrest assembly (120), thus, all the components of the MICSS (100) are contained within its external boundaries, namely, the boundaries of the base assembly (110) and backrest assembly (120). Furthermore, base (110) and backrest assembly (120) (i.e., with the padded seat cushion (122) attached thereon) are configured with dimensions and contours that correspond to the dimensions and contours of a standard car seat (201). Alternatively, various configurations of MICSS (100) may be designed with dimensions and contours that correspond to vehicle seats of different car models, such that at its folded/stored position, all the components of the MICSS (100) are contained within its outside boundaries, hence with the boundaries of the original vehicle's seat cushion.

**Figs. 2A-2D** illustrate various configurations of integrated use of MICSS (100) in a vehicle's rear seat, according to an embodiment of the present invention. One **(****Fig. 2A****),** two **(****Fig. 2B****),** or three units of the MICSS (100) **(****Fig. 2C****)** are interchangeably installed with different portions of the rear seat cushion (201), or its entirety. In **Figs. 2A-2C** illustrated units of MICSS (100) are all in a stored position, aligned with cushion 201 of the vehicle's seat for seamless use as a regular rear seat. **Figs. 2A-2C** demonstrate the flexibility provided by the MICSS (100), where a combined use of integrated units of MICSS (100) with the vehicle seat - as a regular car seat / or as a safety seat - is made possible where any of the installed units of the MICSS (100) may be simply and promptly deployed, as described in detail hereinafter. **Fig. 2D** illustrates the configurations of **Fig. 2B****,** with the two units of MICSS (100) at their upright position, ready for use as a safety seat. It is noted in **Fig. 2D** that each of the MICSS (100) is adapted to a different child height.

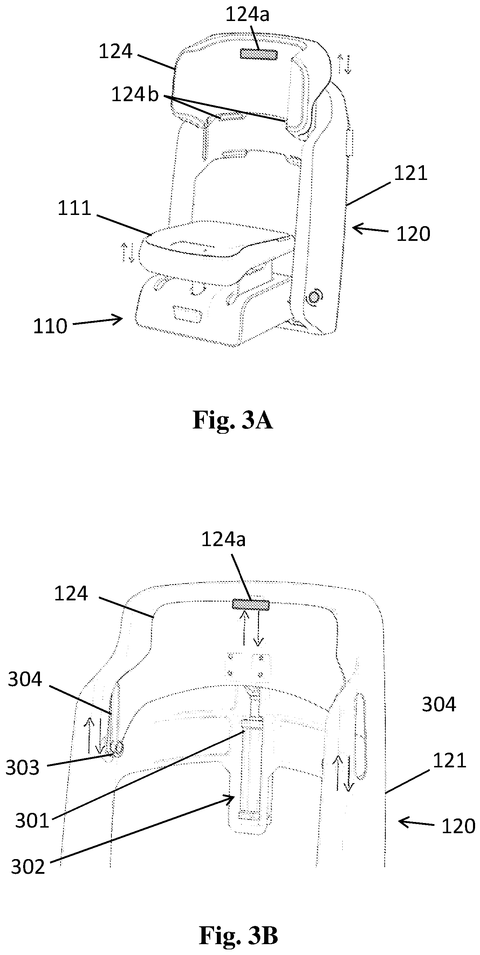

**Figs. 3A-3B** illustrate an optional adjustment mechanism of the headrest (124) of a MICSS (100), according to an embodiment of the present invention. The headrest adjustment button (124a) provides a position locking affixing of headrest (124) to backrest assembly (120), for instance, by a locking pin thereof engaged within a corresponding locking socket within the backrest assembly (120). Thus, the pressing on headrest adjustment button (124a) releases the locking pin from within the locking socket (not shown) in the backrest assembly (120) and enables the upward/downward motion of headrest (124). It can be noted in **Fig. 3A** that the height of safety belts (125) (previously discussed in reference to **Fig. 1B****)** is simultaneously adjusted with the lifting/descending adjustment of headrest (124) and corresponding movement of safety belts threading sockets (124b) therewith.

Noted in **Fig. 3B****,** which is a piston (301) assembled flat within a groove (302) of backrest (120) and provides auxiliary lifting force to enable easy lifting of headrest (124) as the headrest adjustment button (124a) is pressed. Headrest (124) is further anchored to backrest (120) by corresponding protrusions (303), rigidly attached to headrest (124), and can axially slide upwardly and downwardly within guiding grooves (304) within backrest (120). The three support points of headrest (124), namely, its anchorage to piston (301) and to grooves (304) provides a firm and stable attachment of headrest (124) to the backrest assembly (120), and an effortless adjustment thereof, by pressing the headrest adjustment button (124a), while lifting or lowering headrest (124). According to certain embodiments, the locking arrangement of the headrest adjustment mechanism comprises two or more locking sockets for providing multiple headrest height lockable positions, hence, multiple heights at which adjustment button (124a) can be released and prevent the movement of headrest (124) upwardly/downwardly.

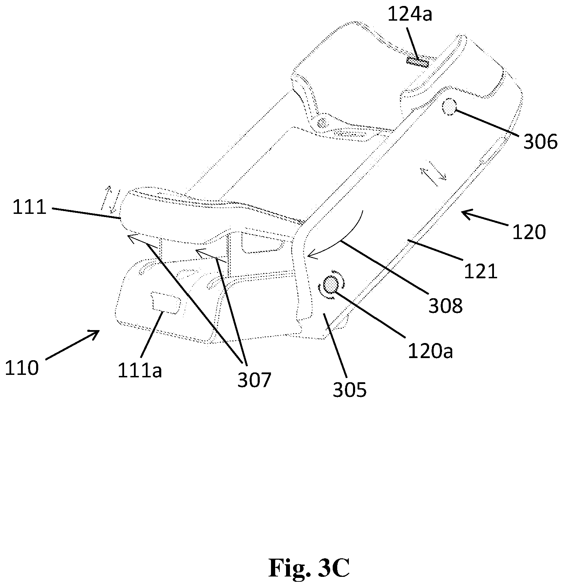

**Fig. 3C** illustrates an exemplary configuration of the MICSS (100), which may be suitable for infants/toddlers, according to an embodiment of the present invention. In this embodiment, the backrest assembly (120) is at an obtuse angle with respect to the base assembly (110), the adjustable seat (111) is lifted, and the headrest (124) is at its lowest position. Further noted in **Figs. 3A** **and** **3C** that the lower edge (305) of backrest frame (121) of backrest assembly (120) is wider than base assembly (110), enabling an uninterrupted rotation of the backrest (120) to obtuse angles with respect to the base assembly (110), where at its lower edge (305), backrest frame (121) laterally confines the proximal edge of base assembly (110). For example, according to certain embodiments of the present invention, the MICSS (100) can be adjusted to heights ranging from 50 cm to 150 cm, and to inclination angles between 0 degrees (i.e., at its stored position) to 150 degrees, enabling its use for infants/toddlers and young children of any age.

MICSS (100) may be adapted to various schemes of car seat deployment and residing components, whereas in some of the various schemes, portions of the MICSS (100) and components therein may be inaccessible. To facilitate its compatibility with such schemes, MICSS (100) may be provided with alternatively designed and located actuation buttons/knobs. For example, an alternative inclination adjustment button (306) may be utilized at the top of backrest assembly (120) for actuating an inclination adjustment mechanism thereof, by utilizing a suitable mediating transmission thereto. Furthermore, seat knob (111a) and inclination adjustment button (120a) may be operated in various manners, such as by rotation, pressing, sliding, pulling actions, and the like, or by combinations thereof.

Furthermore, according to certain embodiments of the present invention, MICSS (100) is provided with an alternative adjustable mechanism of seat (111) that enables its simultaneous lifting and advancing with respect to base assembly (110), as indicated by arrows (307), thus concurrent inclination and advancing of the lower portion of backrest assembly (120), as indicated by arrows (308), thus reducing the backward protrusion of the top portion of backrest assembly (120), hence, its potential conflict with the vehicle seat's backrest, thereby enabling proper installation of MICSS (100), interchangeably with the vehicle seat cushion, while backrest assembly (120) is inclined at obtuse angles.

**Figs. 4A-4B** illustrate an internal view of base assembly (110), showing an exemplary configuration of the seat height and backrest inclination adjustment mechanisms of MICSS (100), according to an embodiment of the present invention. In this embodiment, the base assembly (110) comprises a bottom plate (401) adapted with one or more support ribs (401a) and a base cover (402) having guiding sockets (402a), where a seat height adjustment piston (403), a backrest inclination adjustment piston (404), and their housings (403a,404a), are supported between bottom plate (401) support ribs (401a) and base cover (402).

The height adjustment of seat (111) is performed by actuating (e.g., pressing, shifting, rotating, etc.) seat height adjustment knob (111a), which releases a corresponding locking arrangement (e.g., that extracts a locking pin from a corresponding locking socket in piston (403) (not shown) to enable its upward movement that may be driven by the internal pneumatic pressure within the housing (403a) of piston (403). Piston (403) pushes a load distribution plate (405) installed underneath a seat stabilizer (406) of seat (111), thereby piston (403) lifts seat (111) in a stabilized manner while extensions (406a) of stabilizer (406) extend through guiding sockets (402a) of base cover (402). The lifting of seat (111) is enabled upon the seat height adjustment knob (111a) being released or upon seat (111) reaching its uppermost position. According to certain embodiments, the locking arrangement of the seat adjustment mechanism comprises two or more locking sockets for providing multiple seat height lockable positions, hence, multiple heights at which the adjustment knob (111a) can be released and block the movement of seat (111) upwardly/downwardly.

According to certain embodiments of the present invention, the piston (403), the distribution plate (405), the seat stabilizer (406), and the guiding sockets (402a) are respectively arranged and aligned within the base assembly (e.g., inclined with respect to each other and to bottom plate (401)) to facilitate simultaneous lifting and advancing of seat (111) with respect to base (110) and backrest assembly (120), as previously discussed in **Fig. 3C****.** For instance, piston (403) may be forwardly inclined to simultaneously push distribution plate (405) in the upward and forward directions. As noted in **Fig. 4A****,** the abovementioned seat height adjustment mechanism is completely contained within the base assembly (110), enabling its containment within the boundaries of the backrest assembly (120), namely the MICSS (100) boundaries when folded to a stored position.

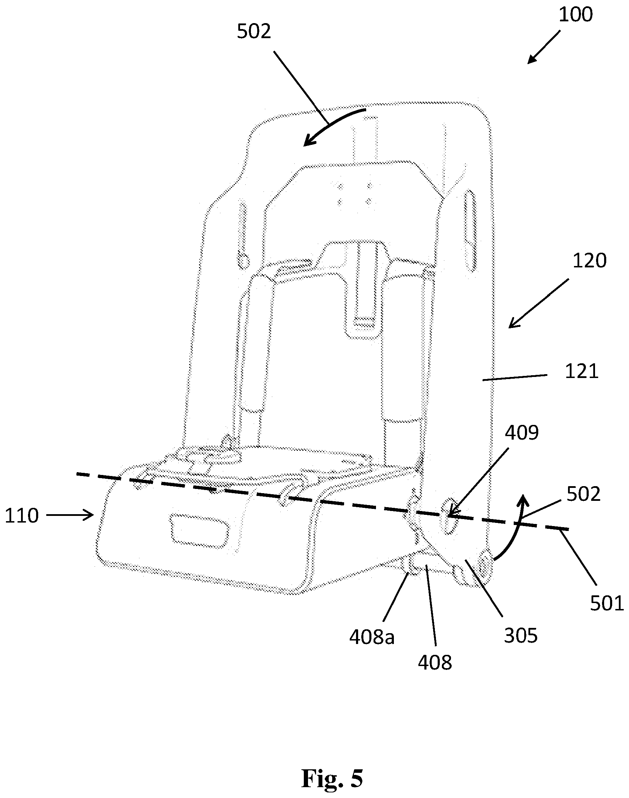

**Figs. 4A-4B** further illustrate that the inclination adjustment piston (404) restrictedly engages a crank (407) which is hinged within arms (408a) of a crankshaft (408). Crankshaft (408) is rotatably attached to the lower portion of backrest assembly (120). Also shown in **Figs. 4A-****4B** are backrest inclination locks (409) which selectively function as rotation locks or as rotation hinges of the backrest assembly (120) and base assembly (110). The backrest inclination locks (409) comprise (i) one or two at least partially cogged wheels (409a) adapted with central sockets (409c), into at least one of which a spring-loaded tab (hidden for the sake of clarity) is attached, where the spring-loaded tab is also attached to the inclination adjustment button (120a) and therethrough to backrest frame (121) of backrest (120); and (ii) correspondingly cogged sockets (409b) which are firmly attached to bottom plate (401) of base assembly (110). As long as the inclination adjustment button (120a) is not actuated, one or more cogged wheels (409a) are maintained engaged within cogged sockets (409b) by the spring-loaded tabs, thus maintaining a rigid connection that locks the respective rotation between backrest frame (121) and base assembly (110), thus corresponding inclination of backrest assembly (120). Upon actuation by a user of MICSS (100), the inclination adjustment button (120a) (e.g., being pressed, rotated, shifted, and the like) forces the abovementioned spring-loaded tab to push at least one cogged wheel (409a) to disengage its cogged portion from the corresponding cogged socket (409b) and thereby enables respective rotation between backrest assembly (120) and base assembly (110) as further illustrated in **Fig. 5** hereinafter.

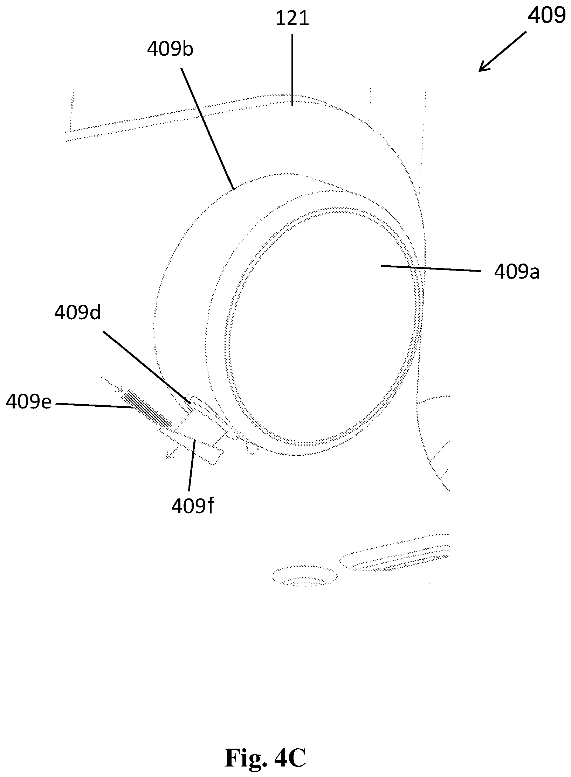

Another optional backrest inclination lock (409) is illustrated in **Fig. 4C****,** where the selective engagement of wheel (409a) and socket (409b) is obtained by a locking-pin-and-sockets arrangement, comprising peripheral depressions in wheel (409a) (i.e., hidden by socket (409b)) into which a spring-loaded pin (409d) is engaged to lock the respective rotation between wheel (409a) and socket (409b) and, thus, the inclination of backrest assembly (120) respectively to base (110). Upon activation, the inclination adjustment button (120a) (e.g., being pressed, rotated, shifted, and the like) by a user of MICSS (100) forces a tapered surface of an unlocking tab (409e) towards a corresponding tapered surface (409f) of the spring-loaded pin (409d), pulling it from engagement with the corresponding peripheral depression of wheel (409a), and thereby to disengage wheel (409a) from socket (409b). Accordingly, wheel (409a) and socket (409b) may be of a smooth rounded type (rather than in the cogged engagement of **Fig. 4B****).** The locking-pin-and-sockets arrangement, comprising multiple peripheral depressions of wheel (409a), correspondingly establishes multiple lockable inclination angles of backrest assembly (120) with respect to base assembly (110).

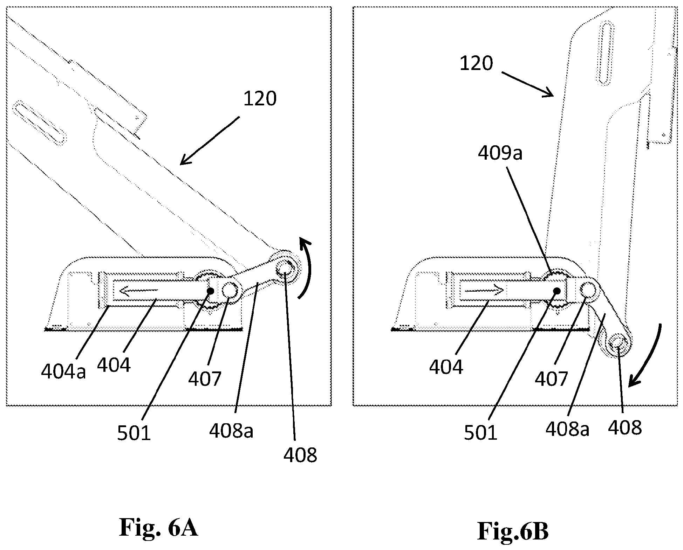

**Fig. 5** illustrates the rotation of backrest assembly (120) with respect to base assembly (110), where a dashed rotation axis (501), which is concentric with inclination lock (409) attached between backrest frame (121) and bottom plate (401) of base assembly (110), illustrates the rotation axis of backrest assembly (120) respective to base assembly (110) upon activation of the inclination adjustment button (120a). The two arrows indicated by the numeral (502) illustrate the simultaneous rotation direction of the top portion of backrest assembly (120) and of its lower portion (305) encircling rotation axis (501) and forcing crankshaft (408) (also shown in **Fig. 4B** and in **Figs. 6A-6B****),** which is hinged with lower portion (305) (e.g., within bearings), to similarly encircle axis (501). It can be noted in **Fig. 5** and in **Figs. 6A-6B****,** that the unique arrangement of crank (407), crankshaft (408), and the arms (408a) extended therebetween, enables a smooth rotation of backrest assembly (120) with respect to base assembly (110), while piston (404) supports that rotation and also provides an auxiliary locking assistance once the backrest assembly (120) reaches an upright position, as further illustrated in **Figs. 6A-6B****.**

The cogged locking arrangement of cogged wheels (409a) and cogged sockets (409b), or the alternative locking arrangement illustrated in **Fig. 4C****,** may enable any predetermined number of multiple lockable positions, such as lockable inclination positions in steps of 10 degrees, corresponding to the cogged wheels parameters or the arrangement of peripheral depressions in the arrangement of **Fig. 4C****.**

Furthermore, the inclination adjustment mechanism illustrated in **Figs. 3C****, 4A-4C, 5, and 6A-6B** facilitate a plurality of detachable locked positions of backrest assembly (120) that enable extended use of the MICSS (100) with babies, toddlers, and children during their early years, during which different inclination angles are allowed and/or required. The lockable inclination positions maintain backrest assembly (120) at its adjusted position and prevent unintended folding thereof without requiring locking/affixing elements externally to the boundaries of MICSS (100).

Also illustrated in **Fig. 5** are the rigid components of MICSS (100), namely, base assembly (110) and backrest frame (121) that form a rigid support structure that confines a child seated therein, where, further to their operational functions, the components of MICSS (100) form a safeguard that protects a seated child from rear and side impacts, supports the moving parts, mechanisms, electronics, and electrical parts that are integrated within the MICSS (100). The rigid components of MICSS (100) may be produced from different types of plastic, metals, aluminum, composite metals, carbon fibers, resilient fabric, and other composite materials. The components of base assembly (110) and backrest assembly (120) may be padded with various elastic and soft covers to provide a comfortable use thereof.

**Fig. 6A** illustrates a rotation of backrest assembly (120) towards a stored position of MICSS (100) while cogged wheels (409a) and cogged sockets (409b) are disengaged, where the encircling rotation of crankshaft (408) around the rotation axis (501) exerts arms (408a) and, therethrough, crank (407) to push piston 404 into its housing (404a). The opposite rotation of backrest assembly (120) towards an upright position, as illustrated in **Fig. 6B****,** exerts the pulling of piston (404) out from housing (404a). Furthermore, the engagement of cogged wheels (409a) and cogged sockets (409b) provides durable inclination locking. For example, when the vehicle is involved in an accident resulting in a rear impact, the impact is distributed by the cogs of cogged wheels (409a) and cogged sockets (409b).

According to certain embodiments of the present invention, the adjustment mechanisms of MICSS (100) are assisted by elevated internal hydraulic/pneumatic pressure within the housings of pistons (403,404) and/or within of piston (301) of the headrest adjustment mechanism of **Fig. 3B****.** Accordingly, the inclination of backrest assembly (120), the seat and headrest height adjustments may be carried out by actuating the seat height adjustment knob (111a), the inclination adjustment button (120a), or the headrest adjustment button (124a), followed by an initial manual movement of the backrest, seat, or headrest, where the further movement thereof is driven by the elevated pressure of pistons (301,403,404).

According to further embodiments of the present invention, one or more of the above adjustment mechanisms of MICSS (100) are electrically/pneumatically/hydraulically powered, such as by utilizing an electric motor or pneumatic/hydraulic driving apparatus, and various combinations thereof in the different adjustment mechanisms. While such powered driving means may be manually operated, e.g., by operating adjustment actuators, such as buttons 120a and/or 306, MICSS (100) may comprise suitable control circuitry and power supply, for operating and controlling the abovementioned powered driving apparatus, optionally enclosed within the base assembly (110) and/or backrest assembly (120). The abovementioned electric/pneumatic/hydraulic driving apparatus may also be controlled by control means integrated with MICSS (100), such as a control panel installed at an accessible portion thereof (e.g., at the side wall of backrest frame (121)), which comprises operation buttons to trigger, for instance, the operations of pistons (301,403,404).

The control circuitry may also comprise a communication module (e.g., wired communication unit, and/or wireless communication unit such as WIFI, Bluetooth, NFC units) that communicates, by wire or wirelessly, with a remote control means (e.g., designated control buttons in the vehicle dashboard, a vehicular multimedia device, a keychain remote control, a remote computing device, a user's mobile device, or a combination thereof) that controls the adjustment mechanisms of MICSS (100).

According to an embodiment of the present invention, any of the abovementioned integrated/remote control means may comprise a voice activation module, whereby the operations of the MICSS (100) can be controlled by predetermined voice commands.

Furthermore, according to certain embodiments of the present invention, the control circuitry of MICSS (100) is provided with one or more sensors for monitoring and desirably submitting the collected information by the sensors to predetermined remote devices. In one example, a collision detection sensor (e.g., a gyroscope-based module or a piezoelectric-based module) is embedded in MICSS (100) for detecting a loading of over a predetermined magnitude was applied on the MICSS (100). Optionally, such a detection may generate a warning on the user's phone, suggesting that the MICSS (100) should be checked or replaced. In another example, position sensors embedded within the MICSS (100) for detecting the recent position of the seat (111), headrest (124) and the inclination of backrest assembly (120). The detected recent position may be stored by the vehicle multimedia system, and may be used, for instance, in conjunction with location detection means to propose the user to deploy the MICSS (100) from a stored state into the last adjusted position whenever the vehicle is parked near a location previously defined as the kindergarten of the user's child.

Correspondingly, multiple different applications may utilize Internet of Things (IoT) sensors to collect operational and usage information associated with the MICSS (100), to be submitted to a predetermined remote computer, and subsequently process the collected data and for various applications.

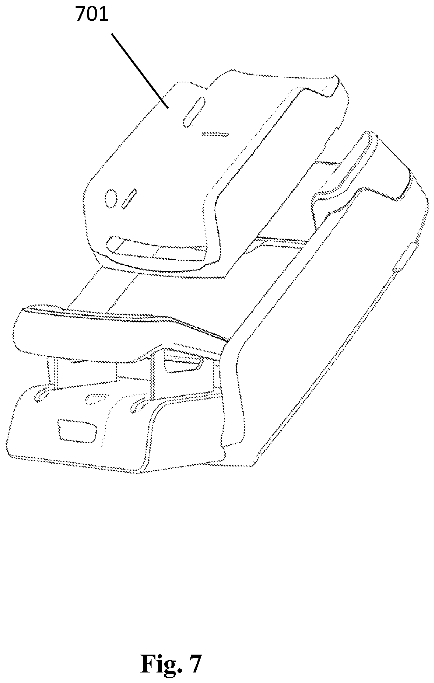

**Fig. 7** illustrates an additional padding layer provided for supporting smaller infants by MICSS (100). Such padding may be easily removed from the MICSS (100) to allow cleaning thereof as well as use of MICSS (100) by a larger child, or to fold MICSS (100) into a stored position.

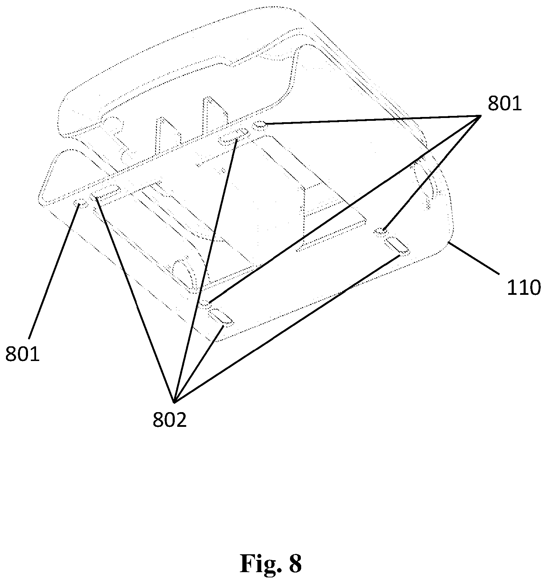

**Fig. 8** illustrates an isometric bottom view of base assembly (110) of MICSS (100), according to certain embodiments of the present invention. The Base assembly (110) of MICSS (100) may comprise docking holes and grooves such as attachment holes (801) and elongated attachment holes (802) for rigidly attaching MICSS (100) to a vehicle chassis interchangeably with a determined portion of a vehicle seat cushion (201) by fasteners threaded through holes (801,802) into/onto corresponding threads in the vehicle chassis, such as the threads with which the original back seat cushion is secured. Of course, multiple different schemes of attachment holes (801,802) may be selected in compliance with different docking threads in various vehicle models. Elongated attachment holes (802) may allow guided shifting of base (110) during its attachment to the vehicle chassis. Moreover, while the same schemes of holes (801,802) may be used for both rear/forward facing docking of the MICSS (100), some of the holes may be dedicated for a specific docking direction, therefore, the elongated attachment holes facilitate broaden attachment compatibility of MICSS (100) to various attachment schemes and both rear/forward facing docking. Furthermore, in certain conditions, when the original attachment of a vehicle seat cushion (201) to the vehicle chassis is insufficiently rigid, the various attachment holes (801,802) can be utilized to add attachments to further attachment holes near the original ones of the vehicle seat cushion.

The following examples illustrate further embodiments of the present inventions that demonstrate various implementations thereof:

### Example 1

A MICSS (100), comprising:
a) a base assembly (110) that comprises a seat (111); and b) a backrest assembly (120), rotatably connected to said base assembly (110), wherein said backrest assembly comprises an adjustable headrest (124) with adjustment mechanism and adjustment actuator thereof, and safety belts (125); characterized in that said MICSS (100) further comprises: c) a seat height adjustment mechanism for adjusting the height of said seat (111), d) an inclination adjustment mechanism for adjusting the inclination of said backrest assembly (120) into two or more detachable locked positions, where at least one of said two or more detachable locked positions is an upright position, in which said MICSS (100) is configured for use as a car safety seat, and another one of said two or more detachable locked positions, is a stored position, in which said MICSS (100) is configured for use as a regular vehicle seat cushion, e) adjustment actuators (111a,120a) for actuating the seat height and backrest inclination adjustment mechanisms, f) one or more backrest inclination locks (409) through which backrest assembly (120) is rotatably engaged with the base assembly (110), said backrest inclination locks (409) selectively lock or enable the respective rotation of backrest assembly (120) and base assembly (110), wherein said base assembly (110) is configured to be rigidly attached to a vehicle's chassis, and wherein said seat height, backrest inclination, and headrest height adjustment mechanisms are enclosed within said base and backrest assemblies, such that at the stored position of the MICSS (100), all its components are contained within its external boundaries, thereby, one or more units of the MICSS (100) can be installed interchangeably with a corresponding portion or the entirety of a vehicle's seat cushion.

### Example 2

A MICSS (100), comprising:
a) a base assembly (110) that comprises a seat (111), b) a backrest assembly (120), rotatably connected to said base assembly (110), wherein said backrest assembly comprises an adjustable headrest (124) with an adjustment mechanism and adjustment actuator thereof, and safety belts (125), characterized in that said MICSS (100) further comprises: c) a seat height adjustment mechanism for adjusting the height of said seat (111), d) an inclination adjustment mechanism for adjusting the inclination of said backrest assembly (120) into two or more detachable locked positions, where at least one of said two or more detachable locked positions is an upright position, in which said MICSS (100) is configured for use as a car safety seat, and another one of said two or more detachable locked positions is a stored position, in which said MICSS (100) is configured for use as a regular vehicle seat cushion, e) adjustment actuators (111a, 120a) for actuating the seat height and backrest inclination adjustment mechanisms, f) one or more backrest inclination locks (409) through which backrest assembly (120) is rotatably engaged with the base assembly (110), said backrest inclination locks (409) selectively lock or enable the respective rotation of the backrest assembly (120) and base assembly (110), wherein each of the one or more backrest inclination locks (409) comprises a wheel (409a) and a corresponding socket (409b), one of which is firmly attached to the base assembly (110), while the second of which is firmly attached to the backrest assembly (120), thus the engagement of said wheel (409a) and socket (409b) forms a rigid connection between backrest assembly (120) and base assembly (110), whereas the disengagement of said wheel (409a) and socket (409b) enables the respective rotation of backrest assembly (120) and base assembly (110), wherein said base assembly (110) is configured to be rigidly attached to a vehicle's chassis, and wherein said seat height, backrest inclination, and headrest height adjustment mechanisms are enclosed within said base and backrest assemblies, such that at the stored position of the MICSS (100), all its components are contained within its external boundaries, thereby, one or more units of the MICSS (100) can be installed interchangeably with a corresponding portion or the entirety of a vehicle's seat cushion.

### Example 3

A MICSS (100), as in example 2, wherein the wheel (409a) and the socket (409b) are correspondingly cogged.

### Example 4

A MICSS (100), as in example 2, wherein the wheel (409a) and the socket (409b) are provided with a locking-pin-and-sockets arrangement.

### Example 5

A MICSS (100), as in any of the above examples, wherein one or more of the adjustment mechanisms are driven by driving apparatus selected from the group consisting of: electric motor, pneumatic driving apparatus, hydraulic driving apparatus, and any combination thereof.

Those driving apparatus may be controlled by integrated control means, such as a control panel installed at an accessible portion of MICSS (100). Alternatively, or additionally, MICSS (100) may comprise a communication module whereby the driving apparatus are electronically controlled by remote control means selected from the group consisting of: designated control buttons in the vehicle dashboard, a vehicular multimedia device, a keychain remote control, a remote computing device, a user's mobile device, and any combination thereof.

### Example 6

A MICSS (100), as in example 5, wherein the control means of the driving apparatus may comprise voice activation module for operating said MICSS (100) by predetermined voice commands.

### Example 7

A MICSS (100), as in any of the above examples, wherein the seat height and/or the headrest height adjustment mechanisms comprise locking arrangements for enabling multiple lockable height positions thereof.

### Example 8

A MICSS (100), as in any of the above examples, wherein the seat height adjustment mechanism is configured to enable simultaneous lifting and advancing thereof with respect to base assembly (110) and to backrest assembly (120).

## Claims

1. A Modular Integrated Car Safety Seat (MICSS 100), comprising:
a) a base assembly (110) that comprises a seat (111); and
b) a backrest assembly (120), rotatably connected to said base assembly (110), wherein said backrest assembly comprises an adjustable headrest (124) with adjustment mechanism and adjustment actuator thereof, and safety belts (125),
**characterized in that** said MICSS (100) further comprises:
c) a seat height adjustment mechanism for adjusting the height of said seat (111);
d) an inclination adjustment mechanism for adjusting the inclination of said backrest assembly (120) into two or more detachable locked positions, where at least one of said two or more detachable locked positions is an upright position, in which said MICSS (100) is configured for use as a car safety seat, and another one of said two or more detachable locked positions, is a stored position, in which said MICSS (100) is configured for use as a regular vehicle seat cushion; and
e) adjustment actuators (111a,120a) for actuating the seat height and backrest inclination adjustment mechanisms,
wherein said base assembly (110) is configured to be rigidly attached to a vehicle's chassis, and wherein said seat height, backrest inclination, and headrest height adjustment mechanisms are enclosed within said base and backrest assemblies, so that at the stored position of the MICSS (100), all its components are contained within its external boundaries, thereby, one or more units of the MICSS (100) can be installed interchangeably with a corresponding portion or the entirety of a vehicle's seat cushion.

2. A MICSS (100) according to claim 1, wherein the backrest inclination adjustment mechanism comprises one or more backrest inclination locks (409) through which backrest assembly (120) is rotatably engaged with the base assembly (110), said backrest inclination locks (409) selectively lock or enable the respective rotation of backrest assembly (120) and base assembly (110).

3. A MICSS (100) according to claim 2, wherein each of the one or more backrest inclination locks (409) comprises a wheel (409a), and a corresponding socket (409b), one of which is firmly attached to the base assembly (110), while the second of which is firmly attached to the backrest assembly (120), thus the engagement of said wheel (409a) and socket (409b) forms a rigid connection between backrest assembly (120) and base assembly (110), whereas the disengagement of said wheel (409a) and socket (409b) enable the respective rotation of backrest assembly (120) and base assembly (110).

4. A MICSS (100) according to claim 3, wherein the wheel (409a) and the socket (409b) are correspondingly cogged.

5. A MICSS (100) according to claim 3, wherein the wheel (409a) and the socket (409b) are provided with a locking-pin-and-sockets arrangement.

6. A MICSS (100) according to claim 1, wherein one or more of the adjustment mechanisms are driven by driving apparatus selected from the group consisting of: electric motor, pneumatic driving apparatus, hydraulic driving apparatus, and any combination thereof.

7. A MICSS (100) according to claim 6, wherein one or more of the driving apparatus are controlled by integrated control means such as a control panel installed at an accessible portion of said MICSS (100).

8. A MICSS (100) according to claim 1, further comprises a communication module whereby the driving apparatus are electronically controlled by remote control means selected from the group consisting of: designated control buttons in the vehicle dashboard, a vehicular multimedia device, a keychain remote control, a remote computing device, a user's mobile device, and any combination thereof.

9. A MICSS (100) according to any of claims 7 and 8, wherein the control means comprises voice activation module for operating said MICSS (100) by predetermined voice commands.

10. A MICSS (100) according to claim 1, wherein the seat height adjustment mechanism comprises locking arrangement for enabling multiple lockable height positions.

11. A MICSS (100) according to claim 1, wherein the adjustment mechanism of the adjustable headrest comprises locking arrangement for enabling multiple lockable height positions.

12. MICSS (100) according to claim 1, wherein the seat height adjustment mechanism is configured to enable simultaneous lifting and advancing thereof with respect to base assembly (110) and backrest assembly (120).

## Patentansprüche

1. Modularer integrierter Autosicherheitssitz (MICSS 100), umfassend:
a) eine Basisbaugruppe (110), die einen Sitz (111) umfasst; und
b) eine Rückenlehnenbaugruppe (120), die drehbar mit der Basisbaugruppe (110) verbunden ist, wobei die Rückenlehnenbaugruppe eine verstellbare Kopfstütze (124) mit Verstellmechanismus und Verstellbetätiger davon umfasst, **und Sicherheitsgurte (125), dadurch gekennzeichnet, dass** der MICSS (100) ferner Folgendes umfasst:
c) einen Sitzhöhenverstellmechanismus zum Verstellen der Höhe des Sitzes (111);
d) einen Neigungsverstellmechanismus zum Verstellen der Neigung der Rückenlehnenbaugruppe (120) in zwei oder mehr lösbare verriegelte Positionen, wobei zumindest eine von den zwei oder mehr lösbaren verriegelten Positionen eine aufrechte Position ist, in welcher der MICSS (100) zur Verwendung als ein Autosicherheitssitz konfiguriert ist, und eine andere von den zwei oder mehr lösbaren verriegelten Positionen eine verstaute Position ist, in welcher der MICSS (100) zur Verwendung als ein reguläres Fahrzeugsitzkissen konfiguriert ist; und
e) Verstellbetätiger (111a, 120a) zum Betätigen der Sitzhöhen- und Rückenlehnenneigungsverstellmechanismen,
wobei die Basisbaugruppe (110) dazu konfiguriert ist, starr an einem Fahrzeugchassis angebracht zu sein, und wobei die Sitzhöhen-, Rückenlehnenneigungs- und Kopfstützenhöhenverstellmechanismen innerhalb der Basis- und Rückenlehnenbaugruppe eingeschlossen sind, sodass an der verstauten Position des MICSS (100) alle seine Komponenten innerhalb seiner Außengrenzen enthalten sind, wodurch eine oder mehrere Einheiten des MICSS (100) austauschbar mit einem entsprechenden Abschnitt oder der Gesamtheit des Sitzkissens eines Fahrzeugs installiert sein können.

2. MICSS (100) nach Anspruch 1, wobei der Rückenlehnenneigungsverstellmechanismus eine oder mehrere Rückenlehnenneigungsverriegelungen (409) umfasst, durch welche die Rückenlehnenbaugruppe (120) drehbar mit der Basisbaugruppe (110) eingegriffen ist, wobei die Rückenlehnenneigungsverriegelungen (409) die jeweilige Drehung der Rückenlehnenbaugruppe (120) und der Basisbaugruppe (110) selektiv verriegeln oder ermöglichen.

3. MICSS (100) nach Anspruch 2, wobei jede von der einen oder den mehreren Rückenlehnenneigungsverriegelungen (409) ein Rad (409a) und eine entsprechende Buchse (409b) umfasst, von denen eine fest an der Basisbaugruppe (110) angebracht ist, während die zweite fest an der Rückenlehnenbaugruppe (120) angebracht ist, sodass der Eingriff des Rads (409a) und der Buchse (409b) eine starre Verbindung zwischen der Rückenlehnenbaugruppe (120) und der Basisbaugruppe (110) bildet, während das Lösen des Rads (409a) und der Buchse (409b) die jeweilige Drehung der Rückenlehnenbaugruppe (120) und der Basisbaugruppe (110) ermöglicht.

4. MICSS (100) nach Anspruch 3, wobei das Rad (409a) und die Buchse (409b) entsprechend gezahnt sind.

5. MICSS (100) nach Anspruch 3, wobei das Rad (409a) und die Buchse (409b) mit einer Verriegelungsstift- und Buchsenanordnung bereitgestellt sind.

6. MICSS (100) nach Anspruch 1, wobei einer oder mehrere der Verstellmechanismen durch eine Antriebseinrichtung angetrieben werden, die aus der Gruppe ausgewählt ist, die aus Folgendem besteht: Elektromotor, pneumatischer Antriebseinrichtung, hydraulischer Antriebseinrichtung und einer beliebigen Kombination davon.

7. MICSS (100) nach Anspruch 6, wobei eine oder mehrere der Antriebseinrichtungen durch integrierte Steuermittel wie ein Bedienfeld, das an einem zugänglichen Abschnitt des MICSS (100) installiert ist, gesteuert werden.

8. MICSS (100) nach Anspruch 1, umfasst ferner ein Kommunikationsmodul, wobei die Antriebseinrichtungen elektronisch durch Fernsteuermittel gesteuert werden, die aus der Gruppe ausgewählt sind, die aus Folgendem besteht: benannten Steuerknöpfen in dem Fahrzeugarmaturenbrett, einer Fahrzeugmultimediavorrichtung, einer Schlüsselkettenfernsteuerung, einer Fernrechenvorrichtung, einer mobilen Vorrichtung eines Benutzers und einer beliebigen Kombination davon.

9. MICSS (100) nach einem der Ansprüche 7 und 8, wobei das Steuermittel ein Sprachaktivierungsmodul zum Betreiben des MICSS (100) durch vorbestimmte Sprachbefehle umfasst.

10. MICSS (100) nach Anspruch 1, wobei der Sitzhöhenverstellmechanismus eine Verriegelungsanordnung zum Ermöglichen von mehreren verriegelbaren Höhenpositionen umfasst.

11. MICSS (100) nach Anspruch 1, wobei der Verstellmechanismus der verstellbaren Kopfstütze eine Verriegelungsanordnung zum Ermöglichen von mehreren verriegelbaren Höhenpositionen umfasst.

12. MICSS (100) nach Anspruch 1, wobei der Sitzhöhenverstellmechanismus dazu konfiguriert ist, gleichzeitiges Anheben und Vorrücken davon in Bezug auf die Basisbaugruppe (110) und die Rückenlehnenbaugruppe (120) zu ermöglichen.

## Revendications

1. Siège de sécurité de voiture intégré modulaire (MICSS 100) comprenant :
a) un ensemble base (110) qui comprend un siège (111) ; et
b) un ensemble dossier (120), relié rotatif audit ensemble base (110), ledit ensemble dossier comprenant un appuie-tête réglable (124) avec mécanisme de réglage et actionneur de réglage de celui-ci, **et des ceintures de sécurité (125),**
**caractérisé en ce que** ledit MICSS (100) comprend en outre :
c) un mécanisme de réglage de hauteur de siège destiné au réglage de la hauteur dudit siège (111) ;
d) un mécanisme de réglage d'inclinaison destiné au réglage de l'inclinaison dudit ensemble dossier (120) dans deux, ou plus, positions verrouillées amovibles, où au moins l'une desdites deux, ou plus, positions verrouillées amovibles est une position verticale, dans laquelle ledit MICSS (100) est conçu pour être utilisé en tant que siège de sécurité de voiture, et une autre desdites deux, ou plus, positions verrouillées amovibles, est une position de rangement, dans laquelle ledit MICSS (100) est conçu pour être utilisé en tant que coussin de siège de véhicule ordinaire ; et
e) des actionneurs de réglage (111a, 120a) destinés à actionner les mécanismes de réglage de hauteur de siège et d'inclinaison de dossier,
ledit ensemble base (110) étant conçu pour être fixé de manière rigide au châssis d'un véhicule, et lesdits mécanismes de réglage de hauteur de siège, d'inclinaison de dossier et de hauteur d'appuie-tête étant enfermés dans lesdits ensembles base et dossier, afin qu'au niveau de la position de rangement du MICSS (100), tous ses composants sont contenus dans ses limites externes, ainsi, une ou plusieurs unités du MICSS (100) peuvent être installées de manière interchangeable avec une partie correspondante ou la totalité du coussin de siège d'un véhicule.

2. MICSS (100) selon la revendication 1, ledit mécanisme de réglage d'inclinaison de dossier comprenant un ou plusieurs verrous d'inclinaison de dossier (409) à travers lesquels l'ensemble dossier (120) est en prise de manière rotative avec l'ensemble base (110), lesdits verrous d'inclinaison de dossier (409) verrouillant ou autorisant sélectivement la rotation respective de l'ensemble dossier (120) et de l'ensemble base (110).

3. MICSS (100) selon la revendication 2, chacun du ou des verrous d'inclinaison de dossier (409) comprenant une roue (409a), et une douille correspondante (409b), dont l'une est fermement fixée à l'ensemble base (110), tandis que la seconde est fermement fixée à l'ensemble dossier (120), ainsi la mise en prise de ladite roue (409a) et de ladite douille (409b) forme un raccordement rigide entre l'ensemble dossier (120) et l'ensemble base (110), alors que la séparation de ladite roue (409a) et de ladite douille (409b) permet la rotation respective de l'ensemble dossier (120) et de l'ensemble base (110).

4. MICSS (100) selon la revendication 3, ladite roue (409a) et ladite douille (409b) étant dentées de manière correspondante.

5. MICSS (100) selon la revendication 3, ladite roue (409a) et ladite douille (409b) étant dotées d'un agencement de broches et de douilles de verrouillage.

6. MICSS (100) selon la revendication 1, un ou plusieurs des mécanismes de réglage étant entraînés par un appareil d'entraînement choisi dans le groupe constitué par : un moteur électrique, un appareil d'entraînement pneumatique, un appareil d'entraînement hydraulique et toute combinaison de ceux-ci.

7. MICSS (100) selon la revendication 6, un ou plusieurs des appareils d'entraînement étant commandés par un moyen de commande intégré tel qu'un panneau de commande installé au niveau d'une partie accessible dudit MICSS (100).

8. MICSS (100) selon la revendication 1, comprenant en outre un module de communication au moyen duquel l'appareil d'entraînement est commandé électroniquement par un moyen de commande à distance choisi dans le groupe constitué par : des boutons de commande désignés dans le tableau de bord du véhicule, un dispositif multimédia de véhicule, une télécommande de porte-clés, un dispositif informatique à distance, un dispositif mobile d'utilisateur et toute combinaison de ceux-ci.

9. MICSS (100) selon l'une quelconque des revendications 7 et 8, ledit moyen de commande comprenant un module d'activation vocale destiné à faire fonctionner ledit MICSS (100) par des commandes vocales prédéfinies.

10. MICSS (100) selon la revendication 1, ledit mécanisme de réglage de hauteur de siège comprenant un agencement de verrouillage pour permettre de multiples positions de hauteur verrouillables.

11. MICSS (100) selon la revendication 1, ledit mécanisme de réglage de l'appuie-tête réglable comprenant un agencement de verrouillage pour permettre de multiples positions de hauteur verrouillables.

12. MICSS (100) selon la revendication 1, ledit mécanisme de réglage de hauteur de siège étant conçu pour permettre son levage et son avancement simultanés par rapport à l'ensemble base (110) et à l'ensemble dossier (120).
